Europäisches Patentamt

(19) European Patent Office

Office européen des brevets

(11) **EP 0 936 685 A1**

(12) **EUROPEAN PATENT APPLICATION**
published in accordance with Art. 158(3) EPC

(43) Date of publication:
18.08.1999 Bulletin 1999/33

(51) Int. Cl.$^6$: **H01M 4/02**, H01M 4/58,
H01M 10/40

(21) Application number: 98936673.7

(22) Date of filing: 05.08.1998

(86) International application number:
PCT/JP98/03493

(87) International publication number:
WO 99/08334 (18.02.1999 Gazette 1999/07)

(84) Designated Contracting States:
DE FR GB

(30) Priority: 05.08.1997 JP 21049697
05.08.1997 JP 21089897

(71) Applicants:
• Sony Corporation
Tokyo 141-0001 (JP)
• MITSUBISHI CHEMICAL CORPORATION
Chiyoda-ku, Tokyo 100-0005 (JP)

(72) Inventors:
• YAMAHIRA, Takayuki,
Sony Energytec Inc.
Koriyama, Fukushima-ken 963-0531 (JP)
• TAKEUCHI, Yoshiaki,
Sony Energytec Inc.
Koriyama, Fukushima-ken 963-0531 (JP)
• ISHIHARA, Tadashi,
Mitsubishi Chemical Corp.
Inashiki-gun, Ibaraki 300-0332 (JP)

• KATO, Akio,
Mitsubishi Chemical Corp.
Sakaide-shi, Kagawa 762-0064 (JP)
• FUSE, Toru,
Mitsubishi Chemical Corp. Tsukuba
Inashiki-gun, Ibaraki 300-0332 (JP)
• TAKAO, Noritoshi,
Mitsubishi Chemical Corp.
Sakaide-shi, Kagawa 762-0064 (JP)
• HARASAKI, Masahiko,
Mitsubishi Chemical Corp.
Sakaide-shi, Kagawa 762-0064 (JP)

(74) Representative:
Müller, Frithjof E., Dipl.-Ing.
Patentanwälte
MÜLLER & HOFFMANN,
Innere Wiener Strasse 17
81667 München (DE)

(54) **CARBONACEOUS PRECURSOR, CARBONACEOUS ANODE MATERIAL, AND NONAQUEOUS RECHARGEABLE BATTERY**

(57) A carbonaceous material for a negative electrode in which a true density of 1.65 g/cc to 1.85 g/cc, a content of hydrogen with respect to carbon is 0.01 to 0.15 in terms of an atomic ratio, intervals between (002) planes are 3.45Å to 3.55Å, the thickness of crystalline is 12.0Å to 20.0Å, and assuming that an area enclosed by a base line which is a common tangent line connecting minimal values on the two sides of a (002) diffraction line in a scattered X-ray curve and the (002) diffraction line is S1 and that an area enclosed by a scattered X-ray curve having a diffraction angle 2θ of 4° or more and positioned in lower angle portions as compared with the (002) diffraction line and the base line is S0, an area ratio S0/S1 of S0 with respect to S1 is 0.4 to 2.0. The carbonaceous material for a negative electrode is obtained by oxidizing a carbonaceous raw material containing γ resin in a quantity of 0.5 wt% to 30 wt% to obtain a carbonaceous precursor of an oxidation product containing oxygen with respect to carbon at an atomic ratio of 0.01 to 0.2 and by calcinating the carbonaceous precursor in an inactive atmosphere.

FIG.1

## Description

Technical Field

The present invention relate to a carbonaceous material for a negative electrode as a preferred material for the negative electrode of a non-aqueous secondary battery which has excellent characteristics as a power source for a small-size and light-weight electric apparatuses and an electric automobile and a carbonaceous precursor, and more particularly to a non-aqueous secondary battery containing the carbonaceous material for a negative electrode.

Background Art

In recent years, wide use of portable apparatuses, such as video cameras, portable telephones and portable personal computers, raises a need for secondary batteries to be employed in place of primary batteries because the secondary batteries can repetitively be used. In particular, non-aqueous secondary batteries receive attention, the non-aqueous secondary battery containing a carbonaceous material to serves as a material for the negative electrode, a composite oxide containing lithium to serves as a material for the positive electrode and organic solvent to serve as an electrolyte.

As materials to serve as an active material for the negative electrode, a soft-carbon type carbonaceous material, such as cokes, has been suggested in Japanese Patent Publication No. 4-24831 and a hard-carbon type carbonaceous material has been suggested in Japanese Patent Laid-Open No. 3-25053. As an active material for the positive electrode, $LiMO_2$ (where M is Co or Ni) disclosed in Japanese Patent Laid-Open No. 63-135099 has been suggested.

However, a non-aqueous secondary battery containing the conventional carbonaceous material as the active material for the negative electrode, having excellent cycle lifetime and safety, is required to furthermore raise the energy density. The reason for this lies in that the power consumption in the portable apparatus has been enlarged and a longer operating time permitted by one charging operation has therefore been required.

To achieve this, it might be considered to employ a countermeasure of raising a density of filling the active material on the surface of the electrode. Another method may be employed in which a large quantity of materials of the electrode is packed in the battery can. However, the foregoing countermeasures have limitations. The active materials for the negative electrodes cannot easily raise the energy density because the soft-carbon type carbonaceous material suffers from a small capacity in spite of a high true density. The hard-carbon type carbonaceous material suffers from a low true density in spite of a large capacity.

Disclosure of the Invention

An object of the present invention is to provide a carbonaceous material for a negative electrode having a large capacity per unit volume and a manufacturing method therefor. Another object of the present invention is to provide a non-aqueous secondary battery having excellent cycle lifetime and safety and exhibiting a high energy density.

To achieve the above-mentioned objects, the inventors of the present invention have energetically performed investigations, resulting in detection of the following facts.

The carbonaceous material to form the negative electrode of the non-aqueous secondary battery includes crystalline portions formed by laminating several fragments. The fragments are structural units in each of which benzene rings are planarly connected to one another and each of which has a size of about 10Å. Moreover, the carbonaceous material includes amorphous portions in each of which any regular lamination is not observed. The crystalline portions, in each of which carbon atoms are densely packed, have densities higher than those of the amorphous portions. On the other hand, the amorphous portions have low densities and include many spaces as compared with the crystalline portions. Hydrogen atoms covalent-bonds to a portion of carbon atoms at the ends of the fragments.

When elements, such as lithium, are doped electrochemically, the elements, such as lithium, are occluded in the three following types of sites of the carbonaceous material having the above-mentioned structure. Thus, it can be considered that a high electrochemical capacity is realized.

(1) The elements are occluded between layers of the crystalline portions in the form similar to a graphite interlayer compound.

(2) The elements are occluded in spaces which mainly exist in the amorphous portions.

(3) The elements mutually act on carbon atoms bonded with hydrogen atoms.

Therefore, the carbonaceous material for a negative electrode according to the present invention is arranged to indicate the total volume of spaces in the carbonaceous material with a true density and an X-ray diffraction pattern. As indexes indicating the crystallinity of the carbonaceous material, intervals between plane (002) and the thickness of crystallites are employed. Moreover, the concentration of hydrogen contained in the carbonaceous material is used.

That is, the carbonaceous material for a negative electrode according to the present invention has a true density of 1.65 g/cc to 1.85 g/cc. The content of hydrogen with respect to carbon is 0.01 to 0.15 in terms of atomic ratio. The intervals of the planes (002) are 3.45Å to 3.55Å. The thickness of the crystallite is 12.0Å to 20.0Å. An assumption is made that an area enclosed by a base line which is a common tangent line connecting minimal values on the two sides of a (002) diffraction line in a scattered X-ray curve and the (002) diffraction line is S1. Another assumption is made that an area enclosed by a scattered X-ray curve having a diffraction angle $2\theta$ of 4° or more and positioned in lower angle portions as compared with the (002) diffraction line and the base line is S0. In the foregoing case, an area ratio of S0 with respect to S1 is 0.4 to 2.0.

A method of manufacturing the carbonaceous material for a negative electrode comprises the steps of subjecting the carbonaceous raw material containing $\gamma$ resin by 0.5 wt% to 30 wt% to an oxidizing process to obtain a carbonaceous precursor of an oxidation product having a content of oxygen with respect to carbon which is 0.01 to 0.2; and calcinating the oxidation product in an inactive atmosphere.

The inventors of the present invention have found a fact that provision of a carbonaceous precursor, which has a self-sintering characteristic and which is changed to a carbon material having a large capacity in the following calcinating process, enables the carbonaceous material for a negative electrode having excellent characteristics to be obtained. The carbonaceous precursor according to the present invention is prepared after which the calcinating process is performed so that the negative electrode is formed without a mix, such as a binder. Thus, the density of the active materials in the negative electrode can be raised so that a non-aqueous secondary battery having a high energy density is obtained.

The carbonaceous precursor according to the present invention is a precursor of an active material for a negative electrode of a non-aqueous secondary battery comprising a negative electrode, a positive electrode and a non-aqueous electrolyte, wherein a content of carbon is 80 wt% to 95 wt%, an element ratio O/C of oxygen and carbon is 0.01 to 0.2 and a quantity of $\gamma$ resin is 0.5 wt% to 5 wt%.

A non-aqueous secondary battery according to the present invention comprises a positive electrode, a negative electrode mainly composed of a carbonaceous material and a non-aqueous electrolyte, wherein the carbonaceous material is used to form the negative electrode. Sine the carbonaceous material for a negative electrode has a multiplicity of sites which permit doping/dedoping of lithium, the capacity per unit volume can be enlarged. Thus, a high energy density can be realized.

Brief Description of the Drawings

FIG. 1 is a graph showing a scattered X-ray pattern of a carbonaceous material for a negative electrode according to the present invention;

FIG. 2 is a graph showing a scattered X-ray pattern of the carbonaceous material for a negative electrode obtained in examples;

FIG. 3 is a cross sectional view showing the structure of a coin-type secondary battery according to the present invention; and

FIG. 4 is a cross sectional view showing the structure of a cell for measuring charge/discharge capacity.

Best Mode for Carrying Out the Invention

The present invention will now be described.

The carbonaceous precursor according to the present invention is, in the following process, calcinated in an inactive atmosphere so as to be changed to a practical carbon material suitable to serve as an active material for the negative electrode of a non-aqueous secondary battery. To obtain a sintered negative electrode composed of an active material and a collector, which is employed if necessary, without use of a mixes, such as a binder and a conductive material, a method may be employed by which the powdered carbonaceous precursor is applied with a pressure by using a die or the like to form a compact, followed by performing a calcinating process. If a collector or a lead wire is necessary for the negative electrode, the foregoing elements and the carbonaceous precursor may collectively be molded and sintered. The carbon material obtained by calcinating the carbonaceous precursor according to the present invention may be used as an active material for a negative electrode which is manufactured by binding powder with a binder or the like.

A main portion of oxygen contained in the carbonaceous precursor is gasified in the calcinating process and thus oxygen is lost. However, oxygen is an important factor for introducing the obtained carbon material into the amorphous portions to increase spaces which are able to occlude lithium or the like. It is preferable that the quantity of oxygen is, in terms of the atomic ratio $O/C$ of oxygen and carbon, 0.01 to 0.2, more preferably 0.01 to 0.1 and most preferably 0.04 to 0.06. If the quantity of oxygen is too small, the amorphous portions in a sufficient quantity cannot be included in the carbon material which is obtained in the following calcinating process. Thus, the capacity is undesirably reduced. If the quantity of oxygen is too large, a multiplicity of spaces are created in the carbon material which is obtained in the following calcinating process. Therefore, the density of the carbon material is lowered. In the foregoing case, the object of the present invention to raise the density of the negative electrode cannot be achieved.

The quantity of an organic material which is contained in the carbonaceous precursor and which can be dissolved by toluene, that is, the quantity of $\gamma$ resin or the quantity of a caking component represented by a weight reduction ratio observed during raising of the temperature of the carbonaceous precursor to 600°C in the inactive atmosphere is an important factor which determines molding of the carbonaceous precursor and sintering. The caking component is an organic compound having a low molecular weight and serving to connect particles to one another in the molding process. In the sintering process, the caking component is spontaneously carbonized during the sintering process to permit sintering. That is, if the caking component is too small, there arises a problem in that force to connect particles to one another is too small to obtain a compact or the strength of the compact is too small to withstand handling. In the sintering process, the sintering force is too small to obtain a sintered compact having sufficiently large strength to serve as an electrode. If the quantity of the caking component is too large, sintering excessively proceeds in the calcinating process. As a result, the porosity of the obtained sintered compact is too low to form the negative electrode. That is, it is preferable that the quantity of $\gamma$ resin is 0.5 wt% to 5 wt%, more preferably 1 wt% oxygen 3 wt%. The weight reduction ratio which is observed until the temperature is raised to 600°C is 5 wt% to 12 wt%, preferably 7 wt% to 12 wt%.

The carbonaceous precursor according to the present invention is converted into a material substantially composed of carbon by calcination so as to be used. Therefore, the content of carbon in the carbonaceous precursor is 80 wt% to 95 wt%, preferably 87 wt% to 93 wt%.

A method of obtaining the carbonaceous precursor according to the present invention is not limited particularly. A specific method will now be described. The carbonaceous precursor according to the present invention can be obtained by oxidizing graphitizing carbon precursor, such as petroleum pitch or coal pitch, and by performing a heating process in an inactive atmosphere if necessary. When the graphitizing carbon precursor, such as pitch, is oxidized, it is preferable that the quantity of $\gamma$ resin in the carbonaceous precursor is 0.5 wt% to 30 wt%, more preferably 1 wt% to 30 wt%, and most preferably 3 wt% to 26 wt%. If the quantity of the $\gamma$ resin is too small, the quantity of the caking component in the carbonaceous precursor which can be obtained by the oxidizing process or the heating process cannot be adjusted to satisfy a required range. If the quantity of the $\gamma$ resin is too large, the softening point of the raw material is lowered. Thus, the temperatures in the oxidizing process and the heating process are limited disadvantageously for performing the foregoing processes.

The method of the oxidizing process is not limited particularly if the employed method enables required quantities of oxygen and caking component to be obtained. The specific methods are exemplified by oxidation using oxygen or air, oxidation using sulfuric acid, nitric acid or hydrogen peroxide and oxidation using $NO_2$, $NO_x$, $SO_2$, $SC_x$, halogen or ozone. Also the oxidation method may be performed by a wet process or a dry process.

It is preferable that the dry oxidation process using air is employed to easily complete the process. Specifically, any one of the foregoing method may be employed: a still standing method in which powder of the carbonaceous precursor is introduced into a container after which heating is performed; a stirring method in which powder of the carbonaceous precursor is heated in an air flow or in air blow while powder of the carbonaceous precursor is being stirred; and a method in which a fluidized bed formed by a gas flow or vibrations is used. The still standing method encounters frequent runaway of reactions owning to accumulation of heat generated in the oxidizing reactions. Thus, control cannot easily be performed. The fluidized bed oxidizing method encounters rapid proceeding of reactions. Also the foregoing method cannot easily be controlled. On the other hand, the stirring oxidizing method requires only simple facilities and free from frequent runaway caused from accumulated heat and reactions in excessively short time. Thus, an industrial advantage can be realized. It is preferable that the temperatures in the oxidizing process using air satisfies a range from 100°C to 400°C, more preferably a range from 200°C to 350°C. If the oxidizing temperature is too low, oxidation does not proceed. If the oxidizing temperature is too high, the temperature of a good which must be processed encounters runaway owning to heat generated in the oxidizing process. Thus, the control cannot easily be performed. What is worse, the caking component in an appropriate quantity cannot be maintained. Also the oxidizing time is not limited particularly. If the oxidizing temperature is high, the processing time can be shortened. If the oxidizing temperature is low, the processing time is elongated.

When the quantity of oxygen and the quantity of caking component cannot easily be controlled by the oxidizing process, a heating process which is performed in an inactive atmosphere (that is, in anon-oxidizing atmosphere) may be added after the oxidizing process has been continued until a predetermined quantity of oxygen is obtained. When the heating process is performed, only the caking component is adjusted without expelling oxygen taken in the oxidizing process which is the previous process. Thus, a method can be employed in which the quantity of oxygen and the caking component are independently controlled in independent processes. Thus, the process for improving the stability of the quality can satisfactorily be performed. It is preferable that the heating process is performed in an inactive atmosphere. The temperature in the heating process is selected from a range from 200°C to 450 °C. It is preferable that the temperature is 250°C to 400°C. If the temperature in the heating process is too low, an excess portion of the caking component cannot be expelled. If the temperature is too high, controllability cannot be improved. What is worse, oxygen undesirably starts desorbing.

Since the oxidation reaction is a solid-gas reaction, the particle size of the carbonaceous precursor which is subjected to the oxidation process is selected from a range from 1 $\mu$m to 1 mm in consideration of dispersion of oxygen in solid. It is preferable that the particle size is 200 $\mu$m or smaller, more preferably 5 $\mu$m to 60 $\mu$m and most preferably 10 $\mu$m to 40 $\mu$m. When pulverization is required to obtain a carbonaceous raw material having the above-mentioned particle size, a usual pulverizing method may be employed.

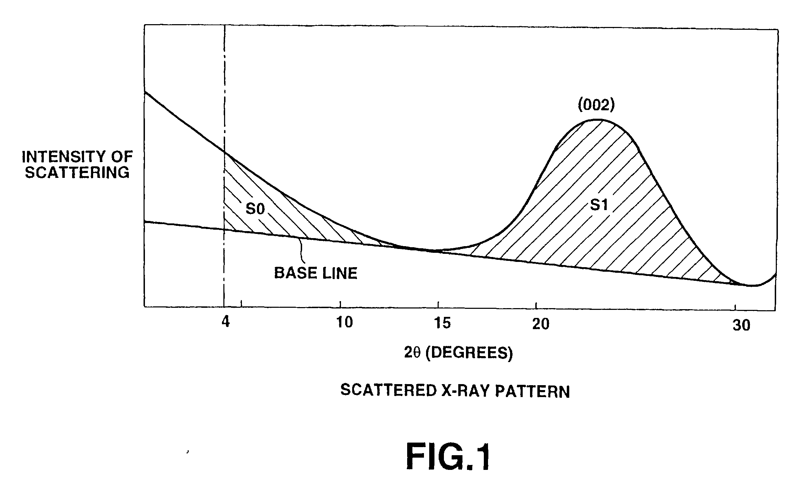

The carbonaceous material for a negative electrode according to the present invention has a true density of 1.65 g/cc to 1.85 g/cc. The content of hydrogen with respect to carbon is 0.01 to 0.15 in terms of atomic ratio H/C. The intervals $d_{002}$ of the planes (002) are 3.45Å to 3.55Å. The thickness Lc of the crystallite is 12.0Å to 20.0Å. As shown in FIG. 1, an assumption is made that an area enclosed by a base line which is a common tangent line connecting minimal values (which appear adjacent to $2\theta = 15°$ and 30°) on the two sides of a (002) diffraction line in a scattered X-ray curve and the (002) diffraction line is S1. Another assumption is made that an area enclosed by a scattered X-ray curve having a diffraction angle $2\theta$ of 4° or more and positioned in lower angle portions as compared with the (002) diffraction line and the base line is S0. In the foregoing case, an area ratio S0/S1 is 0.4 to 2.0. The range of the area ratio S0/S1 is an intermediate value between that of the soft-carbon type carbonaceous material and that of the hard-carbon type carbonaceous material.

The carbonaceous material for a negative electrode has a determined true density and scattered X-ray curve (the area ratio S0/S1) as indexes indicting the total volume of spaces in the carbonaceous material. As the indexes indicating the crystallinity of the carbonaceous material, the intervals of (002) planes and the thickness of the crystalline are defined. Moreover, the concentration of hydrogen contained in the carbonaceous material is determined.

That is, the true density of the carbonaceous material is an important index indicating the total volume of spaces included in the carbonaceous material, that is, the amorphous portions and as well as a basic property which determines the density of active material in the electrode.

If the true density is too high, the amorphous portions are decreased and a structure similar to a graphite structure is undesirably formed. If the true density is too low, that is, if the carbonaceous material has a large amorphous portions and a multiplicity of spaces, occlusion into the spaces is enhanced and the capacity per unit weight is enlarged. However, the density of the electrode is undesirably lowered. Therefore, it is preferable that the true density of the carbonaceous material according to the present invention is 1.65 g/cc to 1.85 g/cc, more preferably 1.71 g/cc to 1.79 g/cc. In the above-mentioned range, a battery in which the two factors are satisfactorily balanced and which enables a large capacity per unit volume can be obtained.

The area ratio S0/S1 obtainable from the scattered X-ray curve of the carbonaceous material according to the present invention is an index indicating the size and content of spaces which enlarge the capacity of the carbonaceous material.

The spaces included in the carbonaceous material create a condensation and rarefaction structure of electrons, causing intense scattering to be shown in small angle regions of the X-ray diffraction pattern. The area S0 corresponds to spaces having a diffraction angle $2\theta$ of 4° to 15°, that is, the condensation and rarefaction period of electrons satisfies a range from about 22Å to about 6Å (= wavelength $\lambda$ of X-ray/$2\sin(\theta)$ ). The foregoing spaces having the specific sizes are important factors. The area ratio S0/S1 is standardization of a content (S0) of the spaces having the specific sizes and contributing to the capacity with a content (S1) of the crystalline portions.

If the area ratio S0/S1 is too low, spaces contributing to the capacity are undesirably reduced. If the area ratio S0/S1 is too high, the density is lowered and the capacity per unit volume is undesirably reduced. Therefore, it is preferable that the area ratio S0/S1 is 0.4 to 2.0, more preferably 0.5 to 2.0, and most preferably 0.5 to 1.5.

The intervals $d_{002}$ between (002) planes of the carbonaceous material according to the present invention and the thickness Lc of the crystalline are indexes indicating the crystallinity of the crystalline portions. The intervals $d_{002}$ between (002) planes and the thickness Lc of the crystalline are important factors to create spaces having required sizes as well as the sizes of the fragments.

If the intervals $d_{002}$ between (002) planes or the thickness Lc of the crystalline is too large, large spaces which do not contribute the capacity are increased. Thus, the capacity is undesirably reduced and decomposition of the electrolyte is undesirably enhanced. If the intervals $d_{002}$ between (002) planes or the thickness Lc of the crystalline is too small, small spaces which do not contribute to the capacity are increased. Thus, the capacity is undesirably reduced and the density of the electrode is undesirably lowered. Therefore, it is preferable that the intervals $d_{002}$ between (002) planes is 3.45Å to 3.55Å, more preferably 3.45Å to 3.52Å. It is preferable that the thickness Lc of the crystalline is 12.0Å to 20.0Å, more preferably 15Å to 20Å, and most preferably 17Å to 19Å.

The atomic ratio H/C of the carbonaceous material according to the present invention is an index for determining the concentration of hydrogen contained in the carbonaceous material and a capacity realized by lithium or the like which is occluded owning to mutual action with carbon atoms bounded with hydrogen atoms.

A carbonaceous material having a high atomic ratio H/C encounters impractical enlargement of the irreversible capacity in a first charging/discharging operation in spite of enlargement of the capacity. Therefore, it is preferable that the atomic ratio H/C is 0.01 to 0.15, more preferably 0.01 to 0.10.

A method of obtaining the carbonaceous material for a negative electrode is not limited particularly. For example, a method in which the above-mentioned carbonaceous precursor is calcinated may be employed.

When the carbonaceous precursor is calcinated in an inactive atmosphere, a required carbonaceous material for a negative electrode can be obtained. The inactive atmosphere is an atmosphere filled with inactive gas, such as nitrogen or argon, or an atmosphere, such as a vacuum atmosphere, the pressure of which has been lowered.

The calcinating process in the inactive atmosphere may be performed by an industrially usual method and therefore the method is not limited particularly.

It is preferable that the calcinating temperature satisfies 800°C to 1400 °C, more preferably 900°C to 1100°C. The calcinating time is industrially advantageous when the process is performed for 1 hour to 3 hours in the above-mentioned temperature range.

The thus-obtained carbonaceous material has the true density of 1.65 g/cc to 1.85 g/cc. The content of hydrogen with respect to carbon is 0.01 to 0.15 in terms of atomic ratio H/C. The intervals $d_{002}$ between (002) planes in the X-ray diffraction measurement is 3.45Å to 3.55Å. The thickness Lc of the crystalline is 12.0Å to 20.0Å. The area ratio S0/S1 of S0 with respect to S1 is 0.4 to 2.0.

When the above-mentioned parameters of the carbonaceous material for a negative electrode are optimized, a multiplicity of sites which permit doping/dedoping lithium can be formed. As a result, the foregoing carbonaceous material can be used as well as a sintered body. Thus, the capacity per unit volume can be enlarged.

To optimize the foregoing parameters, it is effective to use a carbonaceous raw material in which $\gamma$ resin is contained by 0.5 wt% to 30 wt%, followed by oxidizing the carbonaceous raw material to obtain an oxidation product having an atomic ratio O/C of 0.01 to 0.2, and followed by calcinating the oxidation product.

The non-aqueous secondary battery according to the present invention comprises a negative electrode mainly composed of the foregoing carbonaceous material for a negative electrode, a positive electrode and a non-aqueous electrolyte.

Note that movement speed of the element, such as lithium or ions of the element in a solid made of the carbonaceous material is lowest in the crystalline portions each having a dense structure. Therefore, the structure of the electrode must be formed into a porous structure to enlarge the contact between the active material for the electrode and the electrolyte. If the diameters of pores are too small, penetration of the electrolyte is inhibited, causing the capacity to be reduced. Therefore, it is preferable that the average particle size of the carbonaceous material which constitutes the negative electrode is 1 $\mu$m to 100 $\mu$m, more preferably 5 $\mu$m to 50 $\mu$m.

It is optimum that the carbonaceous material obtained in the form of the sintered body is as it is used as the electrode. The carbonaceous material may be pulverized so as to be mixed with the binder and so forth and used as a mix for the electrode. When the sintered body is used as the electrode, a structure may be employed, if necessary, in which a collector and the sintered body are integrated.

The active material for forming the positive electrode of the non-aqueous secondary battery according to the present invention my be any one of conventional materials. Therefore, the material is not limited particularly. Specifically, any one of the following materials may be employed: $LiFeO_2$, $LiCoO_2$, $LiNiO_2$, $LiMn_2O_4$, their non-stoichiometric compounds, $MnO_2$, $TiS_2$, $FeS_2$, $Nb_3S_4$, $Mo_3S_4$, $CoS_2$, $V_2O_5$, $P_2O_5$, $CrO_3$, $V_3O_3$, $TeO_2$ or $GeO_2$.

The electrolyte may be any one of conventional electrolyte if the employed electrolyte is prepared by dissolving the electrolyte in organic solvent. Therefore, the material is not limited particularly. The organic solvent may be ester, such as propylene carbonate, ethylene carbonate or $\gamma$-butylolactone; ether, such as diethylether, tetrahydrofuran, substituted tetrahydrofuran, dioxolane, pyran, their derivatives, dimethoxyethane or diethoxyethane; 3-substituent-2-oxasolidinone, such as 3-methyl-2-oxosolidinone; sulfolane; methylsulfolane; acetonitrile; or propionitrile. Any one of the foregoing materials may be employed or their mixture may be employed. The electrolyte may be any one of the following materials: lithium borofluoride; phosphorus borofluoride; lithium chloride acuminate; lithium halide; and trifluoromethane lithium sulfonate.

The structure of the battery may be a structure formed by spirally winding the positive electrode and the negative electrode through a separator or a structure formed by laminating the positive electrode and the negative electrode through the separator.

The present invention will specifically be described in accordance with results of experiments.

〈Preparation of Carbonaceous Precursor and Evaluation of the Same〉

Comparative Example 1

Coal tar pitch was heat-treated so that the volatile component (VM) was made to be 22.1 wt%, the quantity of $\gamma$ resin was 25.0 wt% and O/C was made to be 0.009 (atomic ratio). Then, heat treatment was performed at 280°C for one hour while mechanical energy being imparted in the presence of air so that a carbonaceous raw material was obtained in which the quantity of $\gamma$ resin was 5.2 wt%, the content of carbon was 94.0 wt%, O/C was 0.012 (atomic ratio) and the quantity of caking component was 14.8 wt%. Pulverization was performed to make the median diameter to be 18 $\mu$m. Thus, powder of the carbonaceous raw material subjected no process was molded and calcinated. Results were shown in Table 1.

The contents of carbon and hydrogen, the particle size, a method of measuring $\gamma$ resin and methods of evaluating moldability, a sintering characteristic and a battery characteristic were as follows and commonly applied to the following comparative examples and examples.

The contents of carbon and hydrogen were measured by "CHN meter 240C" manufactured by Parkin Elmer. The atomic ratio H/C between hydrogen and carbon was calculated by using atomic weights of the elements obtained from the weight ratio between carbon and hydrogen. The element ratio O/C of oxygen and carbon was calculated by using their atomic weights obtained from the weight contents of carbon and oxygen. The content of oxygen was measured by using an oxygen and nitrogen analyzing apparatus (TC-436) manufactured by LECO. A sample in a quantity of 10 mg was enclosed in a nickel capsule so as to be, in a helium flow heated with 300 W for 300 seconds and then heated with 5500 W for 100 seconds. Carbon dioxide generated in the latter heating step with 5500 W was determined by infrared-ray absorption The former heating step was performed to remove adsorbed water or the like.

The particle size was measured in 0.1 wt% water solution of sodium oleate by a laser diffraction and scattering method using LA-500 manufactured by Horiba. The average particle size was obtained as a median diameter which was the particle size with which the estimation in terms of the volume was 50 %.

The quantity of $\gamma$ resin (the quantity of the component which could be dissolved by toluene) was obtained by measuring the quantity of the component which could be dissolved by toluene in accordance with JIS-K2425. The weight reduction ratio observed during raising of the temperature in an inactive atmosphere until the temperature was raised to 600°C was obtained by using heat analyzing apparatus "TG/DTA300" manufactured by Seiko Electronic such that heating was performed at a raising rate of 5 °C/minute in an argon gas flow. A sample weighing about 20 mg was loosely charged into an alumina cylindrical container having a diameter and a height which were about 5 mm so that measurement was performed.

The moldability was evaluated such that powder of the carbonaceous precursor having a weight of 0.4 g was introduced into a mold having a diameter of 20 mm, after which powder was applied with a total pressure of 4 tons for one minute. Thus, a compact having a thickness of about 1 mm was manufactured. A portion or the overall body of the compact was allowed to adhere to the pushing die when removal from the mold was performed and thus a complete compact was not sometimes obtained. When 10 or more compacts were manufactured, a possibility that the above-mentioned phenomenon was observed was made to be an adhesion ratio at mold removal. When 10 or more compacts were manufactured, a possibility that the compacts were cracked or partially broken was made to be a deformation ratio during mold removal.

The sintering characteristic was evaluated such that complete compacts were placed in line on a flat and smooth graphite plate so as to be introduced into a small and close-type electric furnace. Then, the temperature was raised at a raising rate of 300°C/hour in an argon gas flow to 1000°C, followed by maintaining the realized temperature for one hour. Thus, a sintered electrode was manufactured which was then evaluated. A possibility that the sintered electrode was cracked or perfectly broken was called a crack ratio during calcination. A possibility that sintered electrodes were manufactured which encountered expansion of the overall body of the sintered electrode into an oval shape, partially foamed state or loss of the flatness was called an expansion ratio during calcination. The crack ratio during calcination and the expansion ratio during calcination were measured by calcinating 10 or more complete compacts. The density of the sintered electrode was obtained from the volume obtained from the thickness and diameter of the complete electrode and the weight obtainable from the complete electrode.

The characteristic of the battery was evaluated by using a test cell in which the thus-obtained sintered electrode was used as the working electrode and metal Li was used as the counter electrode. Moreover, 1 mole/litter-$LiPF_6$/PC (propylene carbonate) was employed as the electrolyte. The charging/discharging operation was performed by a method using a constant current of 0.2 mA/cm$^2$. The charging operation (doping of Li) was performed until the voltage between electrodes was raised to 0.0 V. Then, the direction of the electric current was inverted to perform discharge (dedoping of Li) until the voltage between the electrodes was raised to 1.5 V. The discharge capacity was obtained from the quantity of electricity observed during the discharging operation. The efficiency was obtained from the ratio of the quantity of electricity during the discharging operation with respect to the quantity of electricity during the charging operation.

Example 1

Powder of the carbonaceous raw material which was the same as that according to Comparative Example 1 and weighted about 200 g was placed in a 28 × 20 cm stainless-steel tray to have a height of about 1 cm and a flat surface. Powder was placed in a hot oven previously heated to 170°C. Then, powder was subjected to an oxidizing process for one hour in an air flow at an oxidizing temperature of 230°C. Obtained powder was calcinated and evaluated. Results were shown in Table 1.

Example 2

A similar process to Example 1 was performed except for the oxidizing temperature which was 250°C. Results were shown in Table 1.

Example 3

A similar process to Example 1 was performed except for the oxidizing temperature which was 300°C. Results were shown in Table 1.

Comparative Example 2

A similar process to Example 1 was performed except for the oxidizing temperature which was 350°C. Results were shown in Table 1.

Comparative Example 3

A similar process to Example 1 was performed except for the oxidizing temperature which was 380°C. Results were shown in Table 1.

Table 1

| Results Of Examples 1 to 3 and Comparative Examples 1 to 3 | | | |
|---|---|---|---|
| | Comparative Example 1 | Example 1 | Example 2 |
| Oxidizing Temperature (°C) | None | 230 | 250 |
| Oxidizing Duration (Hr) | | 1 | 1 |
| O/C | 0.01 | 0.04 | 0.05 |
| C (%) | 94.0 | 91.1 | 90.5 |
| $\gamma$ (%) | 5.2 | 2.1 | 1.8 |
| Quantity of Caking Component (%) | 14.8 | 10.4 | 8.6 |
| Density of Calcinated Electrode | 1.36 | 1.31 | 1.31 |
| Discharge Capacity (mAh/g) | 345 | 371 | 377 |
| Efficiency (%) | 70.3 | 79.1 | 78.7 |
| Deformation Ratio At Removal From Mold (%) | 0 | 0 | 0 |
| Adhesion Ratio At Removal From Mold (%) | 23 | 0 | 0 |
| Crack Ratio At Calcination (%) | 0 | 0 | 0 |
| Expansion Ratio At Calcination (%) | 23 | 0 | 0 |

| | Example 3 | Comparative Example 2 | Comparative Example 3 |
|---|---|---|---|
| Oxidizing Temperature (°C) | 300 | 350 | 380 |
| Oxidizing Duration (Hr) | 1 | 1 | 1 |
| O/C | 0.06 | 0.09 | 0.11 |
| C (%) | 90.4 | 83.0 | 79.0 |
| $\gamma$ (%) | 0.5 | 0.2 | 0.2 |
| Quantity of Caking Component (%) | 6.8 | 4.8 | 3.1 |
| Density of Calcinated Electrode | 1.25 | 1.22 | 1.16 |
| Discharge Capacity (mAh/g) | 385 | 382 | 368 |
| Efficiency (%) | 79.8 | 72.1 | 67.2 |
| Deformation Ratio At Removal From Mold (%) | 0 | 29 | 44 |
| Adhesion Ratio At Removal From Mold (%) | 0 | 0 | 0 |
| Crack Ratio At Calcination (%) | 0 | 0 | 17 |
| Expansion Ratio At Calcination (%) | 0 | 0 | 0 |

Example 4

Powder of the carbonaceous raw material which was the same as that according to Comparative Example 1 and weighted 10 kg was introduced into a kneader having a capacity of 15 litters. While powder was being stirred at a speed of 22 rpm in an air flow, powder was oxidized at 250°C for 10 hours. Obtained powder was molded and calcinated so as to be evaluated. Results were shown in Table 2.

Example 5

A similar process was performed similarly to Example 4 except for the oxidizing process performed at 280°C for 3 hours. Results were shown in Table 2.

Example 6

A similar process was performed similarly to Example 4 except for the oxidizing process performed at 280°C for 7 hours. Results were shown in Table 2.

Example 7

A similar process was performed similarly to Example 4 except for the oxidizing process performed at 330°C for 3 hours. Results were shown in Table 2.

Table 2

Result of Examples 4 to 7

|  | Comparative Example 1 | Example 4 | Example 5 |
|---|---|---|---|
| Oxidizing Temperature (°C) | None | 250 | 280 |
| Oxidizing Duration (Hr) |  | 10 | 3 |
| O/C | 0.01 | 0.05 | 0.04 |
| C (%) | 94.0 | 90.8 | 91.0 |
| γ (%) | 5.2 | 2.5 | 2.9 |
| Quantity of Caking Component (%) | 14.8 | 11.4 | 11.6 |
| Density of Calcinated Electrode | 1.36 | 1.31 | 1.31 |
| Discharge Capacity (mAh/g) | 345 | 384 | 373 |
| Efficiency (%) | 70.3 | 79.9 | 78.6 |

| | | | |
|---|---|---|---|
| Deformation Ratio At Removal From Mold (%) | 0 | 0 | 0 |
| Adhesion Ratio At Removal From Mold (%) | 23 | 0 | 0 |
| Crack Ratio At Calcination (%) | 0 | 0 | 0 |
| Expansion Ratio At Calcination (%) | 23 | 0 | 0 |

| | Example 6 | Example 7 |
|---|---|---|
| Oxidizing Temperature (°C) | 280 | 330 |
| Oxidizing Duration (Hr) | 7 | 3 |
| O/C | 0.05 | 0.05 |
| C (%) | 90.4 | 90.1 |
| $\gamma$ (%) | 2.1 | 1.2 |
| Quantity of Caking Component (%) | 9.7 | 7.7 |
| Density of Calcinated Electrode | 1.29 | 1.28 |
| Discharge Capacity (mAh/g) | 382 | 379 |
| Efficiency (%) | 80.0 | 80.2 |

| | | |
|---|---|---|
| Deformation Ratio At Removal From Mold (%) | 0 | 0 |
| Adhesion Ratio At Removal From Mold (%) | 0 | 0 |
| Crack Ratio At Calcination (%) | 0 | 0 |
| Expansion Ratio At Calcination (%) | 0 | 0 |

### Example 8

Powder of the carbonaceous raw material which was the same as that according to Comparative Example 1 and weighted 10 kg was introduced into a kneader having a capacity of 15 litters. While powder was being stirred at a speed of 22 rpm in an air flow, powder was oxidized at 250°C for 6 hours. Obtained powder of the carbonaceous raw material weighted about 80 g was placed in a 18 × 14 cm stainless-steel tray to have a height of about 1 cm and a flat surface. Powder was placed in a small and closed-type electric furnace to raise the temperature to 300°C at a raising ratio of 300°C/hour in an argon gas flow. Then, powder was heated at the foregoing temperature for one hour so that a sample was obtained. The quantity of the $\gamma$ component, the quantity of the caking component of powder and results of evaluation of the molded and calcinated powder were shown in Table 3.

### Example 9

A process which was the same as that according to Example 8 was performed except for the duration of heating in an argon atmosphere which was 3 hours. Results were shown in Table 3.

### Example 10

A process which was the same as that according to Example 8 was performed except for the heating process performed at 350°C for one hour in an argon atmosphere. Results were shown in Table 3.

### Example 11

A process which was the same as that according to Example 8 was performed except for the heating process performed at 350°C for one hour in an argon atmosphere. Results were shown in Table 3.

### Example 12

A process which was the same as that according to Example 8 was performed except for the heating process performed at 350°C for one hour in an argon atmosphere. Results were shown in Table 3.

## Table 3

Results of Examples 8 to 12

| | Example 8 | Example 9 | Example 10 |
|---|---|---|---|
| Temperature in Heating Process (°C) | 300 | 300 | 350 |
| Heating Duration (Hr) | 1 | 3 | 1 |

| γ (%) | 4.4 | 3.4 | 2.5 |
|---|---|---|---|
| Quantity of Caking Component (%) | 12.1 | 10.9 | 11.0 |
| Density of Calcinated Electrode | 1.30 | 1.31 | 1.29 |
| Discharge Capacity (mAh/g) | 372 | 379 | 382 |
| Efficiency (%) | 77.7 | 78.5 | 80.1 |
| Deformation Ratio At Removal From Mold (%) | 0 | 0 | 0 |
| Adhesion Ratio At Removal From Mold (%) | 0 | 0 | 0 |
| Crack Ratio At Calcination (%) | 0 | 0 | 0 |
| Expansion Ratio At Calcination (%) | 0 | 0 | 0 |

| | Example 11 | Example 12 |
|---|---|---|
| Temperature in Heating Process (°C) | 350 | 400 |
| Heating Duration (Hr) | 3 | 1 |
| γ (%) | 2.9 | 2.1 |
| Quantity of Caking Component (%) | 9.6 | 8.3 |

| Density of Calcinated Electrode | 1.30 | 1.29 |
|---|---|---|
| Discharge Capacity (mAh/g) | 374 | 378 |
| Efficiency (%) | 78.5 | 79.4 |
| Deformation Ratio At Removal From Mold (%) | 0 | 0 |
| Adhesion Ratio At Removal From Mold (%) | 0 | 0 |
| Crack Ratio At Calcination (%) | 0 | 0 |
| Expansion Ratio At Calcination (%) | 0 | 0 |

Comparative Example 4

A carbonaceous raw material obtained by heat-treating coal tar pitch at about 400°C and having $\gamma$ resin by 25.4 wt% and O/C of 0.009 (atomic ratio), carbon in a quantity of 94.2 wt% and a caking component in a quantity of 49.4 wt% was formed into powder having a median diameter of 28 μm. Then, no process was performed, and then molding and calcination were performed so that a sample was obtained. Results were shown in Table 4. The measurement of the characteristics of the electrode manufactured from the obtained sample was impossible because a predetermined number of complete compacts was not obtained.

Comparative Example 5

Powder of the carbonaceous raw material which was the same as that according to Comparative Example 4 and which weighted about 200 g was placed in a 28 × 20 cm stainless-steel tray to have a height of about 1 cm and a flat surface. Powder was placed in a hot oven previously heated to 200°C. Then, powder was subjected to an oxidizing process for four hour in an air flow. Obtained powder was molded and calcinated so as to be evaluated. Results were shown in Table 4. The measurement of the characteristics of the electrode manufactured from the obtained sample was impossible because a predetermined number of complete compacts was not obtained.

Example 13

Powder of the carbonaceous raw material used in Comparative Example 5, subjected to an oxidizing process and weighted about 80 g was placed in a 18 × 14 cm stainless-steel tray to have a height of about 1 cm and a flat surface. The tray was introduced into a small and close-type electric furnace. The temperature was raised to 400°C at a raising ratio of 300°C/hour in an argon gas flow. Heat treatment was performed at the foregoing temperature for 4 hours so that a sample was obtained. The quantity of the $\gamma$ component, the quantity of the caking component of powder and results of evaluation of the molded and calcinated powder were shown in Table 4.

Comparative Example 6

A carbonaceous raw material obtained by heat-treating coal tar pitch at about 450°C and having $\gamma$ resin by 12.9 wt% and O/C of 0.009 (atomic ratio), carbon in a quantity of 94.6 wt% and a caking component in a quantity of 12.6 wt% was formed into powder having a median diameter of 28 $\mu$m. Then, no process was performed, and then molding and calcination were performed so that a sample was obtained. Results were shown in Table 4. The measurement of the characteristics of the electrode manufactured from the obtained sample was impossible because a predetermined number of complete compacts was not obtained.

Example 14

Powder of the carbonaceous raw material which was the same as that according to Comparative Example 6 and which weighted about 200 g was placed in a 28 × 20 cm stainless-steel tray to have a height of about 1 cm and a flat surface. Powder was placed in a hot oven previously heated to 250°C. Then, powder was subjected to an oxidizing process for four hour in an air flow. Powder of the carbonaceous raw material subjected to the oxidizing process and weighted about 80 g was placed in a 18 cm × 14 cm stainless-steel tray was introduced into a small and close-type electric furnace. The temperature was raised to 400°C at a raising ratio of 300°C/hour in an argon gas flow. Heat treatment was performed at the foregoing temperature for 3 hours so that a sample was obtained. The quantity of the $\gamma$ component, the quantity of the caking component of powder and results of evaluation of the molded and calcinated powder were shown in Table 4.

Comparative Example 7

A carbonaceous raw material obtained by heat-treating coal tar pitch at about 500°C and having $\gamma$ resin by 0.1 wt% and O/C of 0.009 (atomic ratio), carbon in a quantity of 94.9 wt% and a caking component in a quantity of 2.2 wt% was formed into powder having a median diameter of 28 $\mu$m. Then, no process was performed, and then molding and calcination were performed so that a sample was obtained. Results were shown in Table 4. The measurement of the characteristics of the electrode manufactured from the obtained sample was impossible because a predetermined number of complete compacts was not obtained.

Comparative Example 8

Powder of the carbonaceous raw material which was the same as that according to Comparative Example 7 and which weighted about 200 g was placed in a 28 × 20 cm stainless-steel tray to have a height of about 1 cm and a flat surface. Powder was placed in a hot oven previously heated to 250 °C. Then, powder was subjected to an oxidizing process for one hour in an air flow. Results of evaluation of obtained powder subjected to molding and calcination were shown in Table 4. The measurement of the characteristics of the electrode manufactured from the obtained sample was impossible because a predetermined number of complete compacts was not obtained.

Table 4

Results of Examples 13 and 14 and Comparative Examples 4 to 8

|  | Comparative Example 4 | Comparative Example 5 | Example 13 | Comparative Example 6 |
|---|---|---|---|---|
| Oxidizing Temperature (°C) | None | 200 | 200 | None |
| Oxidizing Duration (Hr) |  | 4 | 4 |  |
| Temperature in Heating Process (°C) | None | None | 400 | None |
| Heating Duration (Hr) |  |  | 4 |  |
| O/C | 0.01 | 0.06 | 0.06 | 0.01 |
| C (%) | 94.2 | 89.9 | 89.8 | 94.6 |
| $\gamma$ (%) | 25.4 | 13.8 | 3.1 | 12.6 |
| Quantity of Caking Component (%) | 49.4 | 29.9 | 12.0 | 29.2 |
| Density of Calcinated Electrode | – | – | 1.30 | – |
| Discharge Capacity (mAh/g) | – | – | 376 | – |
| Efficiency (%) | – | – | 78.2 | – |

EP 0 936 685 A1

| | | | | |
|---|---|---|---|---|
| Deformation Ratio At Removal From Mold (%) | 0 | 0 | 0 | 0 |
| Adhesion Ratio At Removal From Mold (%) | 58 | 33 | 0 | 37 |
| Crack Ratio At Calcination (%) | 0 | 0 | 0 | 0 |
| Expansion Ratio At Calcination (%) | 100 | 64 | 0 | 58 |

| | Example 14 | Comparative Example 7 | Comparative Example 8 |
|---|---|---|---|
| Oxidizing Temperature (°C) | 250 | None | 250 |
| Oxidizing Duration (Hr) | 1 | | 1 |
| Temperature in Heating Process (°C) | 400 | None | None |
| Heating Duration (Hr) | 3 | | |
| O/C | 0.05 | 0.00 | 0.01 |
| C (%) | 90.8 | 94.9 | 91.0 |
| $\gamma$ (%) | 3.0 | 0.1 | 0.1 |
| Quantity of Caking Component (%) | 11.8 | 2.2 | 1.3 |

| | | | |
|---|---|---|---|
| Density of Calcinated Electrode | 1.31 | – | – |
| Discharge Capacity (mAh/g) | 379 | – | – |
| Efficiency (%) | 78.4 | – | – |
| Deformation Ratio At Removal From Mold (%) | 0 | 53 | 62 |
| Adhesion Ratio At Removal From Mold (%) | 0 | 0 | 0 |
| Crack Ratio At Calcination (%) | 0 | 29 | 33 |
| Expansion Ratio At Calcination (%) | 0 | 0 | 0 |

（Manufacturing of Carbonaceous Material for Negative Pole and Evaluation of Battery Using the Same）

Example 15

A raw material obtained by heat-treating coal tar pitch and having a volatile component (hereinafter called "VM") in a quantity of 22.1 wt%, $\gamma$ resin by 25.0 wt% and an atomic ratio O/C of 0.009 was processed at 280°C for one hour while mechanical energy was being imparted under presence of air. As a result, a carbonaceous raw material was obtained which contained VM by 13.6 wt%, $\gamma$ resin in a quantity of 7.6 wt%, a solid carbon component by 86.03 wt% and an atomic ratio O/C of 0.017. The carbonaceous raw material was pulverized so that the median diameter was made to be 17.3 $\mu$m.

Then, the carbonaceous raw material was subjected to an oxidizing process at 280°C in an air atmosphere for 30 minutes. Thus, an oxidation product (the carbonaceous precursor) was obtained which contained VM by 12.8 wt% and $\gamma$ resin by 1.4 wt% and which had an atomic ratio O/C of 0.048.

Then, the oxidation product was formed into a compact having a thickness of about 1 mm under a pressure of 2 kgf/cm$^2$. Then, the compact was calcinated at 1000°C for 60 minutes in a nitrogen atmosphere so that a carbonaceous material for a negative electrode which was a sintered body having a bulk density of 1.30 g/cc was obtained. The particle size of particles which constituted the sintered body was about 15 $\mu$m.

Example 16

A raw material obtained by heat-treating coal tar pitch and having a VM in a quantity of 22. 1 wt%, $\gamma$ resin by 25.0 wt% and an atomic ratio O/C of 0.009 was processed at 280°C for one hour while mechanical energy was being imparted under presence of air. Thus, an oxidation product(the carbonaceous precursor) was obtained which contained VM by 13.6 wt%, $\gamma$ resin by 7.6 wt%, a solid carbon component by 86.03 wt% and which had an atomic ratio O/C of 0.017.

Then, the oxidation product was pulverized to make the median diameter to be 17.3 $\mu$m. Then, the pulverized material was calcinated at 1000°C for 60 minutes in a nitrogen atmosphere so that a carbonaceous material for a negative electrode was prepared.

Example 17

The oxidation product which was the same as that according to Example 16 was calcinated at 900°C for 60 minutes in a nitrogen atmosphere so that a carbonaceous material for a negative electrode was prepared.

Example 18

The carbonaceous raw material which was the same as that according to Example 15 was subjected to an oxidizing process at 210°C for 30 minutes in an air atmosphere. Thus, an oxidation product was obtained which contained VM by 14.1 wt%, γ resin in a quantity of 4.0 wt% and which had an atomic ratio O/C of 0.022. Then, the oxidation product was calcinated at 900°C for 60 minutes in a nitrogen atmosphere so that a carbonaceous material for a negative electrode was prepared.

Example 19

The carbonaceous raw material which was the same as that according to Example 15 was subjected to an oxidizing process at 260°C for 30 minutes in an air atmosphere. Thus, an oxidation product was obtained which contained VM by 13.6 wt%, γ resin in a quantity of 0.7 wt% and which had an atomic ratio O/C of 0.039. Then, the oxidation product was calcinated at 900°C for 60 minutes in a nitrogen atmosphere so that a carbonaceous material for a negative electrode was prepared.

Example 20

The carbonaceous raw material which was the same as that according to Example 15 was subjected to an oxidizing process at 350°C for 30 minutes in an air atmosphere. Thus, an oxidation product was obtained which contained VM by 18.0 wt%, γ resin in a quantity of 0.2 wt% and which had an atomic ratio O/C of 0.09. Then, the oxidation product was calcinated at 900°C for 60 minutes in a nitrogen atmosphere so that a carbonaceous material for a negative electrode was prepared.

Example 21

A raw material obtained by heat-treating coal tar pitch and having a VM in a quantity of 22.1 wt%, γ resin by 25.0 wt% and an atomic ratio O/C of 0.009 was processed at 260°C for 30 minutes in an air atmosphere. Thus, an oxidation product was obtained which contained VM by 15.2 wt% and γ resin by 3.0 wt% and which had an atomic ratio O/C of 0.034.
Then, the oxidation product was formed into a compact having a thickness of about 1 mm under a pressure of 2 kgf/cm$^2$. Then, the compact was calcinated at 1000°C for 60 minutes in a nitrogen atmosphere so that a carbonaceous material for a negative electrode which was a sintered body having a bulk density of 1.30 g/cc was obtained. The particle size of particles which constituted the sintered body was about 15 μm.

Example 22

A raw material obtained by heat-treating coal tar pitch and having a VM in a quantity of 14.6 wt%, γ resin by 13.0 wt% and an atomic ratio O/C of 0.009 was processed at 260°C for 30 minutes in an air atmosphere. Thus, an oxidation product was obtained which contained VM by 17.7 wt% and γ resin by 1.0 wt% and which had an atomic ratio O/C of 0.078.
Then, the oxidation product was formed into a compact having a thickness of about 1 mm under a pressure of 2 kgf/cm$^2$. Then, the compact was calcinated at 1000°C for 60 minutes in a nitrogen atmosphere so that a carbonaceous material for a negative electrode which was a sintered body having a bulk density of 1.30 g/cc was obtained. The particle size of particles which constituted the sintered body was about 15 μm.

Comparative Example 9

Coal tar pitch was calcinated at 1100°C for 3 hours in an inactive gas atmosphere so that a carbonaceous material for a negative electrode having a particle size of 16.2 μm was obtained.

### Comparative Example 10

Coal tar pitch was calcinated at 700°C for 3 hours in an inactive gas atmosphere so that a carbonaceous material for a negative electrode having a particle size of 16.7 $\mu$m was obtained.

### Comparative Example 11

A carbonaceous raw material obtained by heat-treating coal tar pitch, contained VM by 5 wt%, $\gamma$ resin in a quantity of 0.5 wt% or smaller and having an atomic ratio O/C of 0.007 was pulverized to 45 $\mu$m or smaller. Powder of the foregoing carbonaceous raw material was enclosed in a metal tray at a bulk density of about 0.5 g/cc to have a thickness of about 1 cm. Then, powder was subjected to oxidizing process at 390°C for 5 hours in an air atmosphere. After the oxidizing process was completed, an oxidation product having an atomic ratio O/C of 0.35 was obtained from a range of about 3 mm in the upper portion of the enclosed layer.
Then, the oxidation product was calcinated at 1100°C for 3 hours in a nitrogen atmosphere so that a carbonaceous material for a negative electrode was obtained.

### Comparative Example 12

A carbonaceous raw material obtained by heat-treating coal tar pitch, contained VM by 5 wt%, $\gamma$ resin in a quantity of 0.5 wt% or smaller and having an atomic ratio O/C of 0.007 was pulverized to 45 $\mu$m or smaller. Powder of the foregoing carbonaceous raw material was enclosed in a metal tray at a bulk density of about 0.5 g/cc to have a thickness of about 1 cm. Then, powder was subjected to oxidizing process at 390°C for 4 hours in an air atmosphere. After the oxidizing process was completed, an oxidation product having an atomic ratio O/C of 0.35 was obtained from a range of about 2 mm in the upper portion of the enclosed layer.
Then, the oxidation product was calcinated at 1100°C for 3 hours in a nitrogen atmosphere so that a carbonaceous material for a negative electrode was obtained.

### Comparative Example 13

A carbonaceous raw material obtained by removing light components of ethylene heavy end, which was petroleum, containing VM by 28.7 wt%, $\gamma$ resin by 98.2 wt% and having an atomic ratio H/C of 0.83 was pulverized to 45 $\mu$m or smaller. Powder of the foregoing carbonaceous raw material was placed on a metal tray to have a thickness of about several millimeters, and then powder was subjected to an oxidizing process at 230°C for 3 hours in an air atmosphere. Thus, an oxidation product having an atomic ratio O/C of 0.131 was obtained.
Then, the oxidation product was calcinated at 1100°C for 3 hours in a nitrogen atmosphere so that a carbonaceous material for a negative electrode was obtained.

### Comparative Example 14

A process similar to that according to Comparative Example 13 was performed except for the oxidizing temperature which was 180°C and an oxidation product having an atomic ratio O/C of 0.049. Thus, a carbonaceous material for a negative electrode was obtained.

### Comparative Example 15

A carbonaceous raw material obtained by removing light components of ethylene heavy end, which was a petroleum pitch derived from an ethylene bottom, containing VM by 29.8 wt%, $\gamma$ resin by 37.1 wt% and having an atomic ratio H/C of 0.67 was pulverized to 45 $\mu$m of smaller. Powder of the foregoing carbonaceous raw material was placed on a metal tray to have a thickness of about several millimeters, and then powder was subjected to an oxidizing process at 310°C for 3 hours in an air atmosphere. Thus, an oxidation product having an atomic ratio O/C of 0.254 was obtained.
Then, the oxidation product was calcinated at 1100°C for 3 hours in a nitrogen atmosphere so that a carbonaceous material for a negative electrode was obtained.
Conditions under which the oxidizing processes, the quantities of $\gamma$ resin in the carbonaceous raw materials and contents of oxygen (the atomic ratios O/C) in the oxidation products of the examples and comparative examples are shown in Table 5.

Table 5

| | Oxidizing Condition | | Quantity of γ-Resin in Carbonaceous Raw Material (wt%) | O/C of Oxidation Product |
|---|---|---|---|---|
| | Temperature [°C] | Time [Hr] | | |
| Example 15 | 280 | 0.5 | 7.6 | 0.048 |
| Example 16 | 280 | 1 | 25 | 0.017 |
| Example 17 | 280 | 1 | 25 | 0.017 |
| Example 18 | 210 | 0.5 | 7.6 | 0.022 |
| Example 19 | 260 | 0.5 | 7.6 | 0.039 |
| Example 20 | 350 | 0.5 | 7.6 | 0.09 |
| Example 21 | 260 | 0.5 | 25 | 0.034 |
| Example 22 | 260 | 0.5 | 13 | 0.078 |
| Comparative Example 9 | None | | 0.5< | ND |
| Comparative Example 10 | None | | 0.5< | MD |
| Comparative Example 11 | 390 | 5 | 0.5< | 0.35 |
| Comparative Example 12 | 390 | 4 | 0.5< | 0.35 |
| Comparative Example 13 | 230 | 3 | 98.2 | 0.131 |
| Comparative Example 14 | 180 | 3 | 98.2 | 0.049 |
| Comparative Example 15 | 310 | 3 | 37.1 | 0.254 |

Volatile component (VM) was obtained in accordance with JIS-M8812.

Evaluation of Characteristics

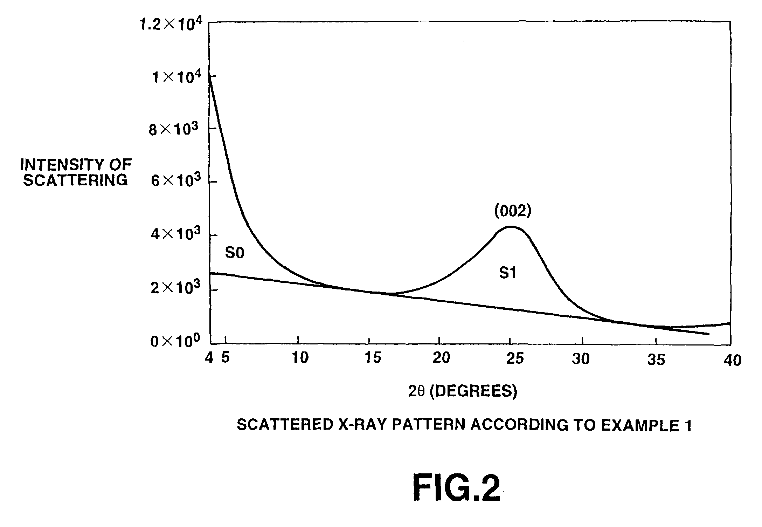

Table 6 shows beating temperatures, intervals $d_{002}$ between (002) planes, the thicknesses Lc of the crystalline, true densities, atomic ratios H/C, area ratios S0/S1 and average particle sizes of component particles of the carbonaceous materials obtained in the examples and comparative examples. FIG. 2 shows a scattered X-ray curve of the carbonaceous material obtained in Example 15 by a transmission method.

## Table 6

| | Calcinating Temperature [°C] | $d_{002}$ [Å] | Lc [Å] | True Density [g/cc] | H/C | S0/S1 |
|---|---|---|---|---|---|---|
| Example 15 | 1000 | 3.50 | 17.4 | 1.75 | 0.048 | 0.79 |
| Example 16 | 1000 | 3.47 | 17.9 | 1.80 | 0.09 | 0.81 |

| | | | | | |
|---|---|---|---|---|---|
| Example 17 | 900 | 3.46 | 17.7 | 1.76 | 0.09 | 0.80 |
| Example 18 | 900 | 3.47 | 18.3 | 1.74 | 0.10 | 0.67 |
| Example 19 | 900 | 3.48 | 17.7 | 1.72 | 0.09 | 1.01 |
| Example 20 | 900 | 3.49 | 16.9 | 1.69 | 0.09 | 1.36 |
| Example 21 | 1000 | 3.48 | 16.8 | 1.77 | 0.09 | 0.53 |
| Example 22 | 1000 | 3.48 | 17.2 | 1.81 | 0.09 | 0.52 |
| Comparative Example 9 | 1100 | 3.44 | 23.9 | 207 | 0.019 | 0.28 |
| Comparative Example 10 | 700 | 3.41 | 18.4 | 1.72 | 0.19 | 0.96 |
| Comparative Example 11 | 1100 | 3.43 | 24.2 | 2.01 | 0.02 | 0.41 |
| Comparative Example 12 | 1100 | 3.44 | 23.8 | 2.05 | 0.02 | 0.30 |
| Comparative Example 13 | 1100 | 3.64 | 11.7 | 1.55 | 0.038 | 3.08 |
| Comparative Example 14 | 1100 | 3.48 | 21.7 | 1.96 | 0.078 | 0.48 |
| Comparative Example 15 | 1100 | 3.59 | 12.0 | 1.54 | 0.049 | 2.91 |

| | Average Particle Size Of Component Particles [μm] | Charge Capacity [mAH/g] | Discharge Capacity | | Capacity Loss |
|---|---|---|---|---|---|
| | | | [mAH/g] | [mAH/cc] | [mAH/g] |
| Example 15 | 15.2 | 469 | 383 | 670 | 86 |
| Example 16 | 13.2 | 494 | 370 | 666 | 124 |

| | | | | | |
|---|---|---|---|---|---|
| Example 17 | 12.0 | 559 | 385 | 678 | 174 |
| Example 18 | 16.6 | 567 | 416 | 724 | 151 |
| Example 19 | 15.6 | 527 | 382 | 657 | 145 |
| Example 20 | 17.3 | 595 | 405 | 684 | 190 |
| Example 21 | 15.3 | 481 | 373 | 660 | 108 |
| Example 22 | 16.4 | 474 | 375 | 679 | 99 |
| Comparative Example 9 | 16.2 | 322 | 267 | 550 | 55 |
| Comparative Example 10 | 16.7 | 906 | 667 | 1147 | 239 |
| Comparative Example 11 | 25.3 | 381 | 289 | 581 | 92 |
| Comparative Example 12 | 26.0 | 325 | 265 | 543 | 60 |
| Comparative Example 13 | 19.5 | 475 | 351 | 544 | 124 |
| Comparative Example 14 | 19.3 | 314 | 239 | 568 | 75 |
| Comparative Example 15 | 13.4 | 516 | 360 | 554 | 156 |

The true density was measured by a n-butanol substitution method using a true-specific-gravity meter(manufactured by Seishin). The carbonaceous raw material was pulverized to 45 μm or smaller, and then dried at 105°C for one hour. Then, the raw material was cooled to room temperature in a nitrogen gas flow so as to be measured.

The atomic ratio H/C, that is, the content of hydrogen with respect to carbon was calculated by using their atomic weights obtained from weight content ratios of carbon and hydrogen. The contents of carbon and hydrogen were measured by a full-automatic element analyzing apparatus (CHN meter 240C manufactured by Parkin Elmer).

The particle size of component particles was measured by a laser diffraction and scattering method using a particle size distribution measuring apparatus ("LA-500" manufactured by Horiba) in 0.1 wt% water solution of sodium oleate. The average particle size was obtained as the particle size and the median diameter which was the particle size with which the estimation in terms of the volume was 50 %.

The intervals $d_{022}$ between (002) planes and the thickness Lc of the crystalline were obtained by X-ray diffraction conforming to a method suggested by committee 117 of Japan Society of for the Promotion of Science. The following apparatuses and measuring conditions were employed.

Measuring Apparatus: X-ray diffraction apparatus PW1710 BASED manufactured by Philips

X-Ray Source: CuKα ray (Ni filter was used)
          (graphite was used as monochrome meter)

X-Ray Output: 40 kV, 30 mA

Measuring Layout: reflecting method

Measuring Method: step scan method was employed at 0.02 degree/step estimated time of 1 second

The area ratio S0/S1 is an area ratio of S0 with respect to S1. An assumption is made that an area enclosed by a base line which is a common tangent line connecting minimal values (which appear adjacent to $2\theta = 15°$ and $30°$) on the two sides of a (002) diffraction line in a scattered X-ray curve obtained by X-ray diffraction measurement and the (002) diffraction line is S1. Another assumption is made that an area enclosed by a scattered X-ray curve having a diffraction angle $2\theta$ of $4°$ or more and positioned in lower angle portions as compared with the (002) diffraction line and the base line is S0. In the foregoing case, an area ratio S0/S1 is 0.4 to 2.0. The following apparatuses and measuring conditions were employed:

Measuring Apparatus: Rotor Flex RU-200B which was an X-ray diffraction apparatus

X-Ray Source: $CuK\alpha$ ray (Ni filter was used)

X-Ray Output: 50 kV, 200 mA

Measuring Range: $2\theta=4°$ to $40°$

Measuring Layout: transmission method

Measuring Method: step scan method was employed at 0.1 degree/step estimated time of 20 second

Detector: filled-type proportional counter tube 5738E1

The sintered bodies (carbonaceous materials for a negative electrode) according to the examples and comparative examples were slightly pulverized to make the radian diameter to be 15 $\mu$m. The obtained material was employed as the active material for the negative electrode. The particle size of powder employed to evaluate the battery was substantially the same as basic particles which constituted the sintered body. Thus, the evaluation of the battery showed the characteristics of the basic particles of the sintered body.

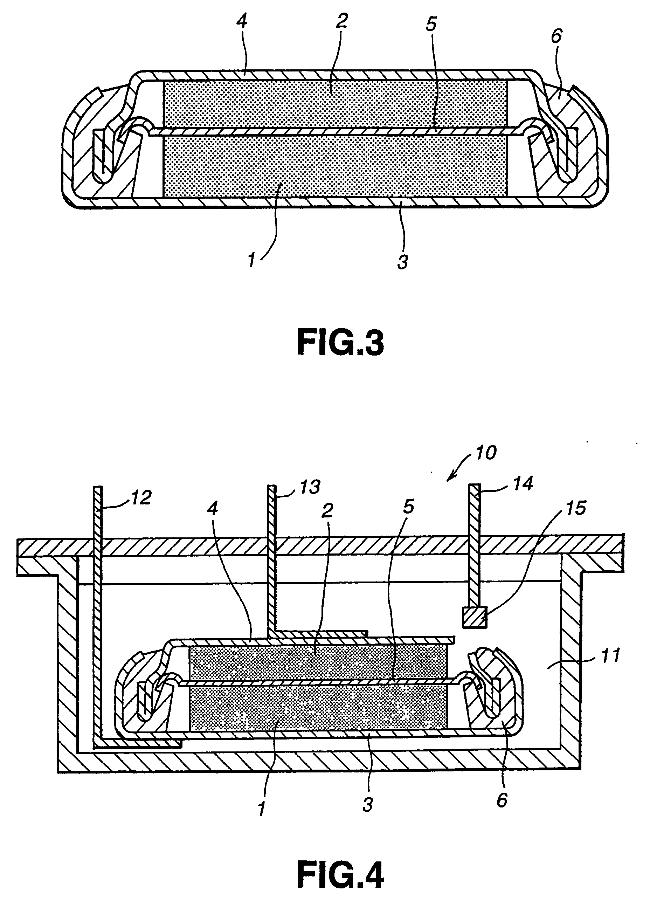

Referring to FIG.3, a method of manufacturing a battery will now be described.

Initially, positive-electrode pellet 1 was prepared as follows.

As an active material in a positive electrode, 0.5 mole of lithium carbonate and 1 mole of cobalt carbonate were mixed, after which the mixture was calcinated in air at 900°C for 5 hours so that $LiCoO_2$ was obtained. $LiCoO_2$ was pulverized into powder having an average particle size of 10 $\mu$m. Then, 91 parts by weight of $LiCoO_2$, 6 parts by weight of graphite serving as a conductive material and 3 parts by weight of polyvinylidene fluoride serving as a binder were mixed, and then N-methyl pyrrolidine was added as a dispersant. Thus, paste was prepared. Paste was dried, and then molded to have a diameter of 15.5 mm. Thus, the positive-electrode pellet 1 was prepared.

Then, negative-electrode pellet 2 was prepared as follows.

Ninety parts by weight of carbonaceous material for a negative electrode according to each of examples and comparative examples were employed as the active material for a negative electrode. Then, 10 parts by weight of polyvinylidene fluoride were added so as to be mixed. Then, N-methyl pyrrolidine was added as a dispersant so that paste was prepared. Then, paste was dried and molded to have a diameter of 16 mm so that the negative-electrode pellet 2 was prepared.

Then, the positive-electrode pellet 1 was accommodated in a positive-electrode can 3 made of aluminum, while the negative-electrode pellet 2 was accommodated in a negative-electrode cup 4 made of stainless steel (SUS304). Then, the positive-electrode pellet 1 and the negative-electrode pellet 2 were laminated through propropylene separator 5. Then, a gasket 6 was placed so as to be crimped so that a corn-type secondary battery having a diameter of 20 mm and a thickness of 2.5 mm was manufactured.

Then, as shown in FIG. 4, an electrolyte 11 was injected into a cell 10 for measuring charge/discharge capacity, the electrolyte 11 being prepared by dissolving $LiPF_6$ by 1 mol/l in mixed solvent of ethylene carbonate and diethyl carbonate. An opening which reached the side surface of the above-mentioned coin-type secondary battery was formed so as to be immersed in the electrolyte 11 in the cell for measuring charge/discharge capacity. Then, a positive electrode 12 was connected to the positive-electrode can 3, and then a negative electrode 13 was connected to a negative-electrode cup 4. Moreover, lithium metal 15 serving as a reference electrode 14 was employed so that 3-electrode cell was manufactured.

A 0.25 mA constant current was used at room temperature to perform charging until the potential of the negative electrode 13 reached 0 V. A 0.25 mA constant current was used to perform discharge until the potential of the negative electrode 13 reached 1.5 V. Then, charge/discharge capacity was measured. When the predetermined potentials were realized, both of the charging and discharging operations were completed. Obtained characteristics as the battery were collectively shown in Table 6.

The carbonaceous materials according to the examples were obtained by oxidizing carbonaceous raw materials having $\gamma$ resin in a quantity of 0.5 wt% to 30 wt% so that the oxidation products having the element ratios O/C of 0.0 1 to 0.2 was obtained. Then, the oxidation products were calcinated. As shown in Table 6, the foregoing carbonaceous materials had optimized parameters including the intervals $d_{002}$ between (002) planes, the thicknesses Lc of the crystalline, the true densities, the atomic ratios H/C, the area ratios S0/S1 and the average particle sizes of component particles. Moreover, the batteries containing the carbonaceous materials having the optimized parameters as the negative electrodes had large charge/discharge capacities.

On the other hand, the carbonaceous materials subjected no oxidizing process and carbonaceous materials obtained by using the carbonaceous raw materials containing resin in too small quantities or in too large quantities have the parameter which were not optimized. The batteries containing the foregoing carbonaceous materials suffers from small charge/discharge capacities or excessive capacity losses.

## Claims

1. A carbonaceous precursor which is a precursor of an active material for a negative electrode of a non-aqueous secondary battery incorporating the negative electrode, a positive electrode and a non-aqueous electrolyte, comprising:

   carbon contained in a quantity of 80 wt% to 95 wt%, wherein

   an element ratio O/C of oxygen and carbon is 0.01 to 0.2 and the quantity of $\gamma$ resin is 0.5 wt% to 5 wt%.

2. A carbonaceous precursor according to claim 1, wherein weight reduction thereof occurring until the temperature is raised to 600°C is 5 wt% to 12 wt% when said carbonaceous precursor is heated in an inactive atmosphere.

3. A method of preparing a carbonaceous precursor, comprising the step of: subjecting a carbonaceous raw material containing $\gamma$ resin in a quantity of 0.5 wt% to 30 wt% to an oxidizing process so that a carbonaceous precursor is prepared which contains carbon by 80 wt% to 95 wt%, in which element ratio O/C of oxygen and carbon is 0.01 to 0.2 and which contains $\gamma$ resin by 0.5 wt% to 5 wt%.

4. A method of preparing a carbonaceous precursor according to claim 3, wherein said carbonaceous raw material is obtained from pitch.

5. A method of preparing a carbonaceous precursor according to claim 3, wherein powder having an average particle size of 200 $\mu$m or smaller is employed as said carbonaceous raw material.

6. A method of preparing a carbonaceous precursor according to claim 3, wherein said oxidizing process is a heating process which is performed at 100°C to 400°C in an oxidizing atmosphere.

7. A method of preparing a carbonaceous precursor according to claim 3, wherein a heating process is performed in a non-oxidizing atmosphere after said oxidizing process has been completed.

8. A method of preparing a carbonaceous precursor according to claim 7, wherein said heating process which is performed in the non-oxidizing atmosphere is performed at 200°C to 450°C.

9. A carbonaceous material for a negative electrode, comprising: a true density of 1.65 g/cc to 1.85 g/cc, wherein

   a content of hydrogen with respect to carbon is 0.01 to 0.15 in terms of an atomic ratio,

   intervals between (002) planes are 3.45Å to 3.55Å, the thickness of crystalline is 12.0Å to 20.0Å, and assuming that
   an area enclosed by a base line which is a common tangent line connecting minimal values on the two sides of a (002) diffraction line in a scattered X-ray curve and the (002) diffraction line is S1 and that an area enclosed by a scattered X-ray curve having a diffraction angle 2θ of 4° or more and positioned in lower angle portions as compared with the (002) diffraction line and the base line is S0, an area ratio S0/S1 of S0 with respect to S1 is 0.4 to 2.0.

10. A carbonaceous material for a negative electrode according to claim 9, wherein the average particle size is 1 μm to 100 μm.

11. A method of manufacturing a carbonaceous material for a negative electrode, comprising the steps of:

oxidizing a carbonaceous raw material containing γ resin in a quantity of 0.5 wt% to 30 wt% to obtain an oxidation product containing oxygen with respect to hydrogen at an atomic ratio of 0.01 to 0.2; and calcinating the oxidation product, wherein

a true density is 1.65 g/cc to 1.85 g/cc, a content of hydrogen with respect to carbon is 0.01 to 0.15 in terms of an atomic ratio, intervals between (002) planes are 3.45Å to 3.55Å, the thickness of crystalline is 12.0Å to 20.0Å, and assuming that an area enclosed by a base line which is a common tangent line connecting minimal values on the two sides of a (002) diffraction line in a scattered X-ray curve and the (002) diffraction line is S1 and that an area enclosed by a scattered X-ray curve having a diffraction angle 2θ of 4° or more and positioned in lower angle portions as compared with the (002) diffraction line and the base line is S0, an area ratio S0/S1 of S0 with respect to S1 is 0.4 to 2.0.

12. A method of manufacturing a carbonaceous material for a negative electrode according to claim 11, wherein the oxidation product is manufactured by any one of methods claimed in claims 3 to 8.

13. A method of manufacturing a carbonaceous material for a negative electrode according to claim 11, wherein calcination which is performed in the inactive atmosphere is performed at 800°C to 1400°C.

14. A non-aqueous secondary battery comprising a positive electrode, a negative electrode mainly composed of a carbonaceous material and a non-aqueous electrolyte, wherein

said carbonaceous material has a true density of 1.65 g/cc to 1.85 g/cc, a content of hydrogen with respect to carbon is 0.01 to 0.15 in terms of an atomic ratio, intervals between (002) planes are 3.45Å to 3.55Å, the thickness of crystalline is 12.0Å to 20.0Å, and

assuming that an area enclosed by a base line which is a common tangent line connecting minimal values on the two sides of a (002) diffraction line in a scattered X-ray curve and the (002) diffraction line is S1 and that an area enclosed by a scattered X-ray curve having a diffraction angle 2θ of 4° or more and positioned in lower angle portions as compared with the (002) diffraction line and the base line is S0, an area ratio S0/S1 of S0 with respect to S1 is 0.4 to 2.0.

15. A non-aqueous secondary battery according to claim 14, wherein an average particle size of said carbonaceous material is 1 μm to 100 μm.

16. A non-aqueous secondary battery according to claim 14, wherein said negative electrode is a sintered electrode.

FIG.1

EP 0 936 685 A1

SCATTERED X-RAY PATTERN ACCORDING TO EXAMPLE 1

# FIG.2

**FIG.3**

**FIG.4**

# INTERNATIONAL SEARCH REPORT

| International application No. |
|---|
| PCT/JP98/03493 |

**A. CLASSIFICATION OF SUBJECT MATTER**
Int.Cl$^6$ H01M4/02, 4/58, 10/40

According to International Patent Classification (IPC) or to both national classification and IPC

**B. FIELDS SEARCHED**

Minimum documentation searched (classification system followed by classification symbols)
Int.Cl$^6$ H01M4/02, 4/58, 10/40

Documentation searched other than minimum documentation to the extent that such documents are included in the fields searched
Jitsuyo Shinan Koho          1926–1996    Toroku Jitsuyo Shinan Koho    1994–1998
Kokai Jitsuyo Shinan Koho    1971–1998    Jitsuyo Shinan Toroku Koho    1996–1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 5-299090, A (Sony Corp.), 12 November, 1993 (12. 11. 93) (Family: none) | 1-16 |
| A | JP, 5-307959, A (Mitsubishi Petrochemical Co., Ltd.), 19 November, 1993 (19. 11. 93) (Family: none) | 1-16 |
| A | JP, 5-325948, A (Osaka Gas Co., Ltd.), 10 December, 1993 (10. 12. 93) (Family: none) | 1-16 |
| A | JP, 7-302593, A (Asahi Organic Chemicals Industry Co., Ltd.), 14 November, 1995 (14. 11. 95) (Family: none) | 1-16 |
| A | JP, 9-147839, A (Matsushita Electric Industrial Co., Ltd.), 6 June, 1997 (06. 06. 97) (Family: none) | 1-16 |
| A | JP, 9-204918, A (Sony Corp.), 5 August, 1997 (05. 08. 97) (Family: none) | 1-16 |

[X] Further documents are listed in the continuation of Box C.    [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 2 November, 1998 (02. 11. 98) | 17 November, 1998 (17. 11. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP98/03493 |

C (Continuation). DOCUMENTS CONSIDERED TO BE RELEVANT

| Category* | Citation of document, with indication, where appropriate, of the relevant passages | Relevant to claim No. |
|---|---|---|
| A | JP, 63-024555, A (Sharp Corp.), 1 February, 1988 (01. 02. 88) & EP, 239410, A & US, 4863814, A | 1-16 |

Form PCT/ISA/210 (continuation of second sheet) (July 1992)